# EUROPEAN PATENT APPLICATION

(11) **EP 2 404 744 A1**
(43) Date of publication of application: **11.01.2012**
(21) Application number: 10380090.0
(22) Date of filing: 07.07.2010
(51) Int. Cl.: B29D 11/00, C09J 5/02

(54) **Adhering procedure between a solar mirror and its bearing structure**

(71) Applicant: Sener Ingenieria Y Sistemas, S.A., 48930 Las Arenas - Vizcaya (ES)
(72) Inventor: Lata Perez, Jesus Maria, 48014 Bilbao (ES); Lecube Inchausti, Xabier, 48991 Getxo (ES)
(74) Representative: Carvajal y Urquijo, Isabel

(57) **Abstract**

Adhering procedure between a solar mirror and its bearing structure comprising:
- a first stage of application of a low-temperature atmospheric plasma on mirror protective organic layers which will receive the adhesive,
- a second stage of application of a polyurethane- or silane-based adhesive, on the areas treated in the first stage, and
- a third stage of joining the bearing structure on the adhesive of the previous stage.

## Description

### Field of the invention .

The present invention refers to the adhering process of a solar mirror from a thermo-solar industrial plant with its bearing frame.

### Background of the invention

Most thermo-solar industrial plants use high-reflectivity solar mirrors, gathered in large mobile structures which concentrate solar reflections on a receiver through which a particular fluid passes. This fluid is heated for its subsequent use in electric energy generation.

Solar central tower plants use a type of mobile structure called heliostat. Each heliostat has a group of basically flat mirrors and each solar plant needs a great number of heliostats.

Heliostats are grouped around a tower and, through the control of their movements, they direct the mirrors so that their reflection is oriented to a receiver located in the upper part of the tower.

This tower is normally more than one hundred meters high, which means that most solar reflections must cover several hundred meters before reaching the receiver surface. Therefore, the mechanism controlling the heliostat must have great precision and its structure must be rigid enough to resist wind loads with minimum deformations.

The energy reflected by a mirror depends on the thickness of the glass. The thicker the glass is, the less reflected energy will be obtained, but the thinner the glass is the less rigid said glass will be. The solution lies on choosing a thin mirror (three or four millimeters thick) and joining it to a frame, usually a metallic one, which stiffens it, to control the reflection better with the distance.

This joining between frame and mirror must be rigid enough to bear wind loads producing very small deformations, but it must enable to absorb expansion differences which appear between the glass and its support due to temperature changes. The impact of hail is another of the requirements which must be considered in this design since along the operating life of the plant (designed to be operative for more than twenty-five years) a hail storm could cause the complete collapse of the project.

Mirror providers are used to manufacture indoor mirrors (for example, bathroom mirrors) which are sometimes under high humidity conditions, but solar mirrors must be capable of enduring much harder weather conditions, such as sand abrasion, wind loads, hail impacts, acid rain, temperature cycles, snow accumulation, ultraviolet radiation,... Therefore, new types of coatings, more resistant ones, have been developed for them.

Solar mirrors are made from extra clear glass which has a very low concentration of iron oxide. This glass has high energy transmission and absorbs little radiation.

The reflective layer is manufactured from a silver solution sprayed on the glass sheet and, depending on the technology, can be coated with copper.

After the silver deposition (and, if it applies, the copper deposition) there exist different coating systems which consist of several layers of paint. These layers of paint are very water resistant to prevent silver corrosion and thus loss of reflectivity. They also prevent dust deposition and are very resistant to ultraviolet rays.

The more water resistant a coating is, the more difficult it will be to adhere said coating with an adhesive, since the pores used by the adhesive as mechanical anchorage points are reduced. With these new coatings with reduced surface energy, and therefore difficult to adhere, the range of possible adhesives to be used is reduced. High adhesive capacity on this type of coatings, controlled adhesive stiffness and chemical compatibility with the final protective layer are too many requirements for an adhesive. Besides, the great number of joints to perform (about hundreds of thousands of joints) forces to choose an adhesive which can be industrialized and which has a short curing time.

The most usual solution of heliostat manufacturers is to give up adhesive rigidity and select a silicone adhesive or use a type of coating of less quality (with greater porosity) in order to guarantee the integrity of the joint and its durability.

A successful joint depends on several factors, but one of the most important ones is the compatibility of surface tensions between the surface to be adhered and the adhesive. This will be possible as long as the surface tension of the substrate is higher than that of the adhesive, in this case the adhesive will be able to wet the surface of the substrate and when curing is performed, the adherence will be guaranteed (unless there is chemical incompatibility).

Traditionally, if the surface tension of the substrate is low, there exist several methods to increase it and achieve a guaranteed joint. Most of these methods consist of the oxidation of the substrate surface. The most common treatments are flame treatment, corona or the use of priming.

The flame treatment consists of a flame fed by a mixture of gas and air and it is applied on the surface to be adhered which reacts forming an oxide film on the surface. This oxidized film is permanent and is generated due to the heat of the flame and the projection of particles coming from the combustion on the substrate.

The corona treatment uses a high voltage arc generated between two electrodes to oxidize the surface and the priming uses an acid- or alcohol-based solution.

The application of these treatments results in different values of surface energy and consequently different adhesive resistances. They all have in common the generation of a permanent oxidation on the surface.

However, when there is outdoor exposure, an permanently oxidized surface damages the guarantees offered by the mirror provider over time.

To summarize, currently there are three adhesive techniques with adhesive joint guarantee:
● Low water resistance coating (it produces silver corrosion and thus loss of reflectivity) and rigid adhesive application.
● High water resistance coating (hard to adhere) and silicone-based adhesive application to guarantee the integrity of the joint, but without rigidity.
● High water resistance coating with oxidation treatment of the surface (it produces damages in the mirror in the long term but it is easy to adhere) and rigid adhesive application.

### Description of the invention

The adhering process of the invention solves the aforementioned problems, allowing a resistant adhesion of a solar mirror with a frame, using controlled rigidity adhesives, without secondary effects on the solar mirror such as silver corrosion and loss of reflectivity, or damages to the mirror in the long term.

By controlled rigidity adhesive we mean an adhesive whose behavior in deformation is prefixed by design, so that it is flexible enough to absorb impacts or absorb differences in thermal expansions produced by the temperature between the mirror and the frame, usually metallic, and rigid enough to restrict deformations produced by wind loads guaranteeing focus quality.

This process guarantees the mechanical anchorage of the adhesive between the frame and the protective layers of the mirror, without damaging the reflecting properties thereof or its resistance to hard weather conditions as time goes by.

The controlled rigidity of the adhesive based on modified polyurethane- or silane-based adhesives is part of the design of the structure which requires a rigid behavior to control solar reflection along great distances.

This joint is guaranteed throughout time and withstands weather conditions such as gale-force winds, hail impacts or thermal cycles.

The adhering procedure of the invention comprises:
- a first stage of application of a low-temperature atmospheric plasma on mirror protective organic layers which will receive the adhesive,
- a second stage of application of a polyurethane- or silane-based adhesive, on the areas treated in the first stage, and
- a third stage of joining the bearing structure on the adhesive of the previous stage.

The atmospheric plasma reduces the risk of degradation of the coating and of the substrate, compared to other high temperature processes, granting the surface great adherence capacity, controlled rigidity and chemical compatibility.

The atmospheric plasma treatment promotes the adherence of the adhesive on the substrates of the mirror protective layers, and enables to make the adhering process independent from the previous process of mirror manufacturing, with layers as protective as possible. After the plasma treatment, the adhesive is applied on treated areas, protecting them from outdoor exposure.

For the atmospheric treatment to be effective, two parameters must be taken into account: the passing speed (m/min) and the projection distance (mm). These parameters directly affect the surface tension generated by the plasma treatment on the most outer layer of the mirror varnishes or paints.

Since the material constituting solar mirrors is not a homogeneous material, such as plastic, with the atmospheric plasma treatment it is desired to alter only its most outer layer and only as regards its surface tension, in order to promote its adhesive capacity, but without affecting it as regards its porosity, etc., so that it still protects the mirror silver layer together with the rest of the paint layers.

To obtain the aforementioned result, it is necessary to obtain a surface tension of the most outer layer equal to or higher than 38mN/m, or else the adherence between the mirror and the adhesive would fail and there would be a detachment of the joint later.

### Detailed description of an embodiment

The atmospheric plasma is an air flow with great amount of energy. It behaves as a gas and sends light energy containing ions and highly energized electrons.

When the atmospheric plasma is projected on the substrate surface the plasma reacts with the surface to clean it and activate it through the break of polymer chains and polarizing the surface. Oxygen atoms react with the surface pollutants, eliminating them.

The device preferred for this application is the PLAMATREAT® plasma nozzle. Plasma is generated through an electric discharge controlled inside a small chamber fed with compressed air. This air turned into plasma is pushed towards the outside of the chamber through a nozzle and finally it is projected on the substrate. The electric discharge uses a 5kV electrode and the air supply is previously filtered to remove humidity and oil to guarantee the quality of the plasma.

If the exposure of the substrate to the plasma is excessive, the surface can be damaged due to heat excess and the adhesive characteristics are negatively affected. In this application the exposure time is a function of the relative speed between the substrate and the plasma nozzle. The second variable is the distance between the plasma nozzle and the substrate.

Generally, a smaller distance is required for metallic surfaces but organic coatings use a 12mm nominal distance which is where the yellow part of plasma flame is found.

Robots in charge of applying plasma cannot work at speeds higher than 40m/min. Moreover, as the application of the adhesive is not performed in a straight line (which is where a robot can perform the fastest speed), the application speeds can be slightly lower than nominal ones and this effect is slightly offset increasing the projection distance of the plasma on the mirror.

The plasma jet from the nozzle generally treats a small substrate surface about 6mm wide where there appear the highest surface energy results, but the areas closest to this region are also affected at lower scale.

As the air expelled from the nozzle is at a temperature of around 300 degrees Celsius, if an excessive exposure time is maintained due to a low process speed or a very small distance between the substrate and the nozzle end, the layers of the mirror can be affected by heat, which would produce a loss of their properties.

However, the substrate exposure to the plasma treatment under nominal distance conditions of 12mm and a 30n/min speed does not produce significant alterations and therefore the substrate does not lose its properties of resistance to weather conditions. By nominal conditions it is to be meant the parameters (distance or passing speed) of the maximum surface tension value resulting from the treatment with the minimum risk of damage of the protection layer, both established within a range of maximum reliability given by the parameters of the production process (possible robot speed and tolerances of their movements).

Besides, the effect of this treatment is local, where the adhesive is later applied, covering it, and in any case it has been verified by tests that it is a temporal effect and that after a few days the treated surface recovers its initial properties.

Table 1 shows the surface tension generated by the plasma treatment on the most outer layer of the mirror varnishes or paints for different combinations of passing speed (m/min) and projection distance (mm).

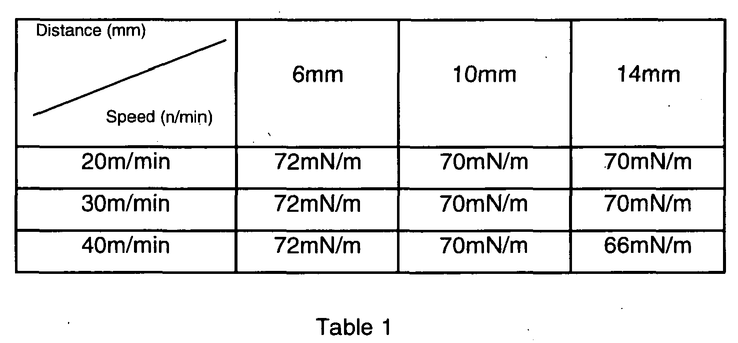

In the tests performed in a laboratory it has been proved how an excessive exposure of the mirror protective layers to the plasma jet produces permanent damages in its structure which are evidenced by the appearance of dendrites in the mirror surface, which indicate the start of a fusion of the surface coating.

These damages, which at macroscopic level are seen as a loss of the coating shine, are produced at mirror exposure speeds equal to or lower than 20m/min combined with distances between the nozzle and mirror equal to or lower than 6mm.

In the following table 2, there are shown the shine results obtained, for different combinations of passing speed (m/min) and projection distance (mm), where "shine" means undamaged, without damage, and "No shine" means damaged:

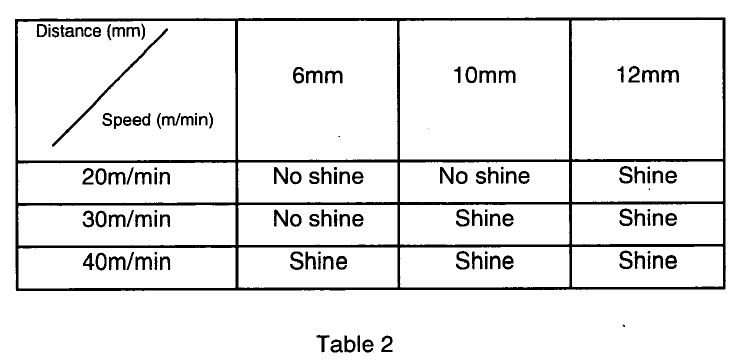

However, in the range of distances between 10mm and 12mm, both included, and passing speeds between 30m/min and 40m/min, both included, it has been proved that there is no structure modification and it is possible to maintain the surface tension needed to guarantee the adherence. Besides, it has been verified that this surface tension modification disappears with time in those areas which remain exposed to the open air, so that those treated areas which during the adhering process were not covered with the adhesive, would regain their original surface tension and therefore their initial resistance to weather conditions.

Also, any manufacturing process of these characteristics must be reliable and in the case of plasma, there is a time when, small distance increases, when greater than 14mm, produce great surface tension falls, therefore, if there is a greater distance than that of the table the process starts to lose reliability.

### Comparative Example

A comparative test of a series of mirror test tubes is performed.

The test is performed using three different test tube manufacturing processes.

On test tube A, after cleaning it with a dry cloth, a silane-type line of adhesive is applied, which is 5mm high x 10mm wide x 100mm long.

On test tube B, after cleaning it with a cloth, an atmospheric plasma treatment is applied with the parameters of 12mm distance and a speed of 30m/min, after which a line of silane-based adhesive is applied which is 5mm high x 10mm wide x 100mm long.

On test tube C, after cleaning it with a cloth, a treatment with an oxidizing agent promoting adherence is applied. Once this product is dry, a loss of shine in the original substrate can be seen as well as the detachment of small particles of coating. On this test tube, a line adhesive which is 5mm high x 10mm wide x 100mm long is applied.

After a 48-hour drying process the three test tubes are subjected to a peel test to verify the adherence. Test tube A produces a clean detachment of the adhesive from the mirror substrate, which is qualified, according to standards, as adhesive breaking which is inadmissible. Test tubes B and C produce a cohesive failure, which is considered satisfactory.

Later tests performed on the test tubes treated with the adherence promoting agent (test tube C) and with plasma (test tube B) show that in the case of test tube C treated with the adherence promoting agent, the Persoz hardness of the final mirror layer is reduced between 36% and 70% with respect to the nominal value, while test tube B treated with plasma does not reduce its Persoz hardness.

Later surface tension tests show that with the treated area exposure to the open air, the surface tension of test tube B treated with plasma recovers the initial value of the surface tension previous to the treatment while the surface treated with the adherence promoting agent keeps its surface tension with time, which indicates that the process caused permanent damage.

## Claims

1. Adhering procedure between a solar mirror and its bearing structure **characterized in that** it comprises:
- a first stage of application of a low-temperature atmospheric plasma on mirror protective organic layers which will receive the adhesive,
- a second stage of application of a polyurethane- or silane-based adhesive, on the areas treated in the first stage, and
- a third stage of joining the bearing structure on the adhesive of the previous stage.

2. Adhering procedure according to claim 1 **characterized in that** the exposure of atmospheric plasma on mirror protective organic layers which will receive the adhesive is performed at a projection distance between 10mm and 12mm and a passing speed between 20m/min and 30m/min.
